# EUROPEAN PATENT APPLICATION

(11) **EP 4 588 624 A1**
(43) Date of publication of application: **23.07.2025**
(21) Application number: 24152433.9
(22) Date of filing: 17.01.2024
(51) Int. Cl.: B25J 5/04, B25J 9/00

(54) **ROBOT SYSTEM**

(71) Applicant: Yaskawa Nordic AB, 385 25 Torsås (SE)
(72) Inventor: Moulder, Lee, 385 33 Torsås (SE)
(74) Representative: AWA Sweden AB

(57) **Abstract**

The present disclosure relates to a robot system (1) for carrying out work in two different work areas (A, B). The robot system comprising a support unit (10) positioned between the two work areas, an elongated beam (20) arranged on the support unit such that the elongated beam is allowed to linearly move between a first position, where a first end portion (22) thereof extends out over a first work area, and a second position where a second end portion (24) thereof extends out over a second work area. The robot system further comprises a robot (30), a suspension unit (40) configured to hold the robot and arranged on the elongated beam such that the suspension unit is allowed to move along the elongated beam, and a drive arrangement (50) configured to individually move the elongated beam and the suspension unit, thereby allowing the robot to selectively operate in each of the two work areas.

## Description

### Technical field

The present disclosure relates to a robot system.

### Background

Robot systems play an important role across various industries, revolutionizing manufacturing processes and enhancing efficiency. In automotive manufacturing, robots are employed for tasks such as welding, painting, and assembly, streamlining production lines and ensuring precision. Robots can be configured to be able to move between different work areas. In manufacturing, these robots can be programmed to switch between assembly lines or workstations, optimizing production efficiency.

A stationary robot will have down time when the working area is prepared for the robot. Allowing the robot system to move between different work areas provides the robot system with flexibility to work at one area while the other work area is occupied or being prepared for the robot.

Gantry robots are one example of a robot system that are able to work in different work areas. Gantry robots are characterized by their overhead or elevated structure, often supported by a track or rail system that allows movement along a specific path. Another example is a rotatable robot which is positioned between two work areas and able to swich work area by rotating from one work area to another one.

However, the gantry robots are not space efficient enough and the movement of the robot system provides challenges during control and programming of the robot. Therefore, there is a need of improved robot systems.

### Summary

It is an object of the invention to provide a solution that addresses at least some of the design criteria described above, namely, to provide more space efficient robot systems, and robot systems that are easier to control. Preferably, the robot system is more efficient than existing systems, further reduces the labour costs and increases the labour safety.

This has in accordance with a first aspect been accomplished by a robot system for carrying out work in two separate work areas. The robot system comprising a support unit configured to be positioned between the two work areas and an elongated beam extending along a geometrical X-axis and arranged on the support unit such that the elongated beam is allowed to linearly move between a first position, where a first end portion thereof is configured to extend from the support unit and out over a first of the two work areas, and a second position where a second end portion thereof is configured to extend from the support unit and out over a second of the two work areas. The robot system further comprises a robot, a suspension unit configured to hold the robot and arranged on the elongated beam such that the suspension unit is allowed to move along the elongated beam, and a drive arrangement configured to individually move each of the elongated beam and the suspension unit, thereby allowing the robot to selectively operate in each of the two work areas.

The robot system is provided with two different linear movements along the X-axis, the elongated beams linear movement on the support unit, and the suspension units linear movement along the elongated beam. This allow the robot to switch between the work areas through a linear movement which is advantageous when controlling and programming the robot. The linear movement allow the robot to keep the coordinate system in which the robot operates, which facilitates the use of software that are dependent on coordinate systems. If the robot switches work area by rotating, the coordinate system may be affected, which may be challenging for the software to handle. As an example, If the robot rotates 180° around an axis, for example the Z-axis, the robot system orientation will change. The x-axis of the robot will now align with the negative x-axis of the initial coordinate system, the Z-axis remains the same, and the Y-axis becomes the negative Y-axis. If the work areas are changed trough a linear movement, there will be no effect on the system orientation. Therefore, the linear movement provides a robot system in which different softwares are easier to implement.

The elongated beam is moveable between the first position and the second position such that the robot may work in one work area while the other work area is partly free. The elongated beam is allowed to move along the support unit such that, for example, the first end of the elongated beam is extending from the support unit and into one work area, thereby moving the second end away from the other work area and at least mostly leaving the other work area free. The two work areas may therefore be referred to as an occupied work area, where the robot is working, and a free work area. When the elongated beam is moved into the first position the first of the two work areas will be the occupied work area and the second of the two work areas will be the free work area. When the elongated bream is moved to the second position, the first work area will be the free work area and the second work area will be the occupied work area. Thereby, the robot system may work on one object in one work area while the other work area is being prepared with a new object for the robot, thereby increasing the efficiency of the robot system.

The drive arrangement individually moves the elongated beam and the suspension unit. The drive arrangement may first move the elongated beam and thereafter the suspension unit or move both the elongated beam and the suspension unit simultaneously. Generally, only one of the elongated beam and the suspension unit is moved at a time.

The working area is described as an area in which the robot operates in. However, as is understood by the skilled person, the working area rather is a working volume having three dimensions. The wording working area is more commonly used and is therefore used throughout the application.

The robot may be a robot arm having an end tool to be used for example painting, welding, or construction. The robot arm may be jointed to allow the robot arm to operate around an object.

The suspension unit may be elongated along a geometrical Z-axis and the robot may be arranged on the suspension unit such that the robot is allowed to move along the elongated suspension unit, and the drive arrangement may be further configured to individually move the robot along the elongated suspension unit.

Allowing the robot to move along the suspension unit that extends along the Z-axis provides a further dimension in which the robot is allowed to be moved. During operation this will provide further flexibility to the robot system and the robot may be able to operate and reach the object from different angles which may facilitate the work process. Further, the movement along the Z-axis may allow the robot to be moved up and thereby over an object or down at the sides of the object.

The support unit may be mounted to a track extending along a geometrical Y-axis allowing the support unit to move along the track, and the drive arrangement may be further configured to individually move the support unit along the track.

With the track the robot may be moved in a third dimension, thereby providing the possibility to move the robot in three dimensions, along the X-axis, Z-axis, and the Y-axis. When the robot can be moved along the Y-axis similar advantages as for the movement along the Z-axis is provided. Further, the movement along the Y-axis allow the robot to operate along a larger area and with larger objects. The track may also be used to move the robot fully away from the two work areas.

The track may also be a groove, a rail, or other means suitable to move a frame along.

The elongated beam may in the first position be configured to only extend over the first of the two work areas and may in the second position be configured to only extend over the second of the two work areas.

If the elongated beam only extends over one work area, the other work area will be free from the elongated beam. As the elongated beam is not present in the free work area, the free work area may allow personnel or other robots to, in a safe manner, move a finished object away from the free work area, and also to prepare a new object for the robot to work on when finished with the object on which the robot presently is working on in the occupied work area. When the elongated beam is not present in the free work area, space for machines and other robots is provided. If the elongated beam was not moved from the free work area, the elongated beam could be an obstacle when moving and preparing new objects.

Further, when the elongated beam is moved away from one of the work areas the suspension unit with the robot will not be able to move to that, free, work area and personnel is allowed to work in the free work area, without risks of the robot entering the free work area, causing damage to equipment, or providing risks for the personnel. Therefore, the safety of the robot system is further increased.

The drive arrangement may comprise a first drive unit for moving the elongated beam and a second drive unit for moving the suspension unit.

With two separate drive units there is a greater independence between the movement of the elongated beam and the suspension unit. This may provide a higher customization in terms of speed profiles, acceleration and other motion and control parameters. Further, ensuring that the elongated beam and the suspension unit are individually controlled. Further, separate drive units provide fault isolation. In the occurrence of a fault, it may be easier to isolate and diagnose issues.

The drive arrangement may further comprise separate drive units for each of the movements in the X-axis, Y-axis, and the Z-axis.

The system suspension unit may have a locked position in which the suspension unit is positioned when moving the elongated beam between the first and the second position.

With the locked position the suspension unit may be safely locked in the locked position such that the suspension unit does not move when the elongated beam is transited between the first position and the second position. By only moving the elongated beam during the transition may provide a more controlled transition.

The elongated beam may have a length that is less than 67% of a distance, as seen along the X-axis, between two distant opposite sides of the two work areas, and preferably the length may be 50 % of the distance.

By the length of the elongated beam being shorter than the full distance between the two distant opposite sides of the two work areas, it may be ensured that the elongated beam moves mostly out from the free work area, while still not extending pass the occupied work area. This provides a more space-efficient robot system and further improves the safety for the personnel preparing the free work area.

The two distant opposite sides of the work areas relate to one side in each work area which are located opposite and at a distant position from each other. In other words, it relates to the outer boundary of the work areas.

The present disclosure further relates to a second aspect, use of the robot system according to the first aspect.

It may be noted that the use of first, second, third, fourth, fifth, etc. are mainly to be seen as labels facilitating reading and that it does not necessarily mean that there need to be all the intervening numbers of block carousels or portions present. However, to facilitate reading, we have consistently used the numbering first, second, third, fourth, etc., as labels, and in a sense based on an embodiment including all conceivable ends and portions.

Further scope of applicability of the present disclosure will become apparent from the detailed description given below. However, it should be understood that the detailed description and specific examples, while indicating preferred embodiments of the disclosure, are given by way of illustration and that various changes and modifications within the scope of the disclosure will become apparent to those skilled in the art from this detailed description.

### Brief description of the drawings

The invention will by way of example be described in more detail with reference to the appended schematic drawings, which shows a presently preferred embodiment of the invention.
- Fig. 1: discloses the robot system with the suspension unit in the locked position.
- Fig. 2: discloses the robot system in the first position.
- Figs. 3A-B: disclose the robot system in the second position.

### Detailed description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

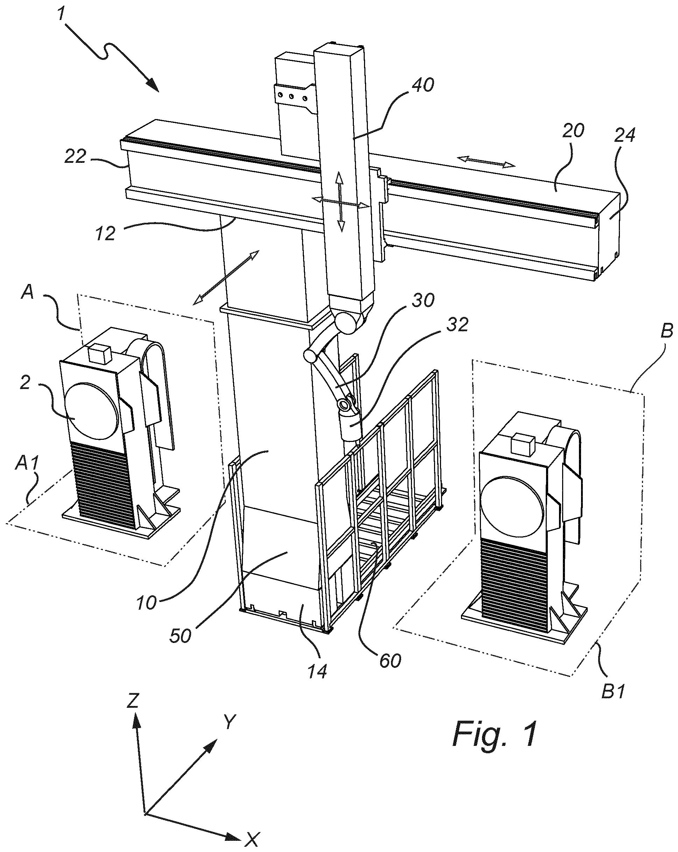

In Fig. 1 a robot system 1 and the possible movement of a robot 30 of the robot system 1 are illustrated. A cartesian coordinate system, with an X-axis, Y-axis and Z-axis is provided to facilitate the understanding of the robot system 1. The robot system 1 is able to work in two different work areas A, B in which the robot 30 is allowed to work on an object 2. The robot system 1 comprises a support unit 10 positioned between the first work area A and the second work area B.

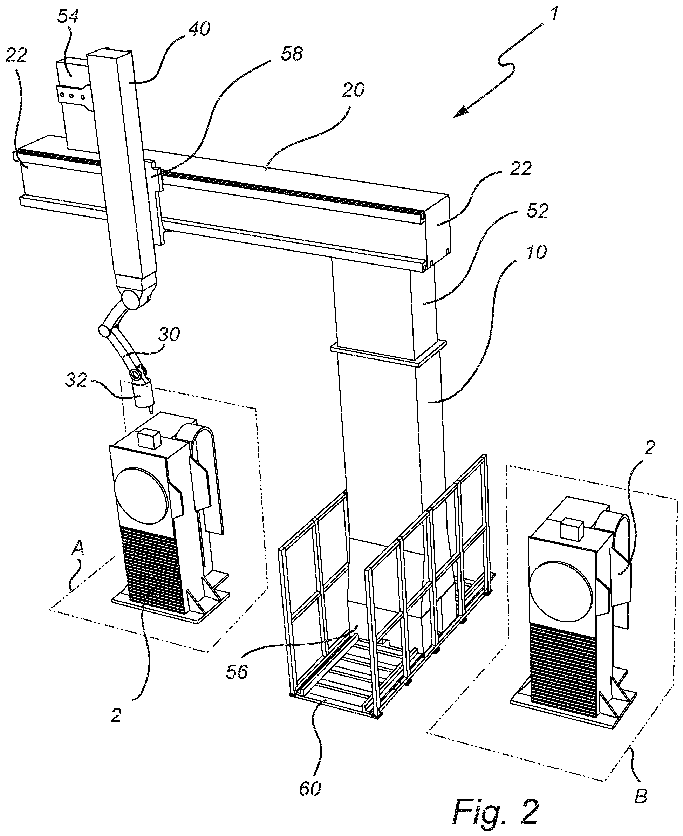

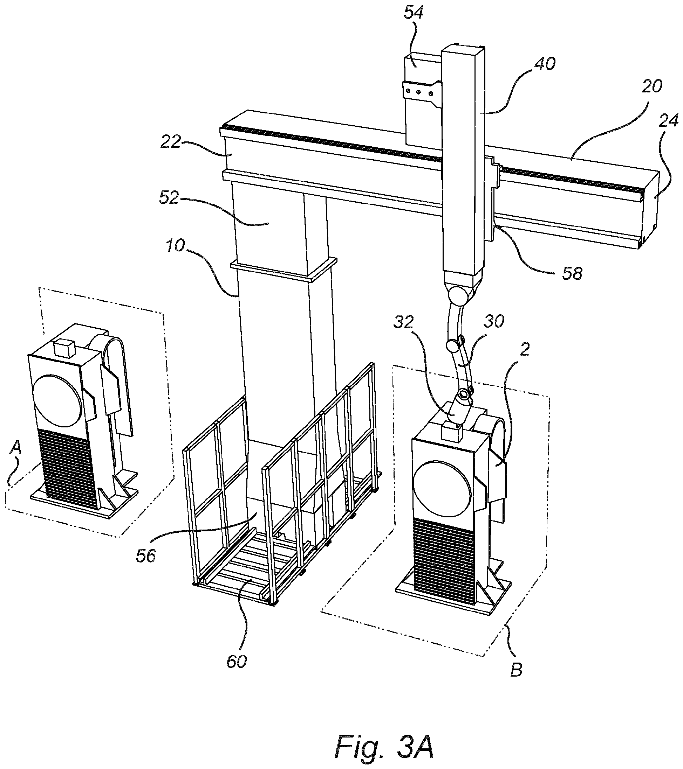

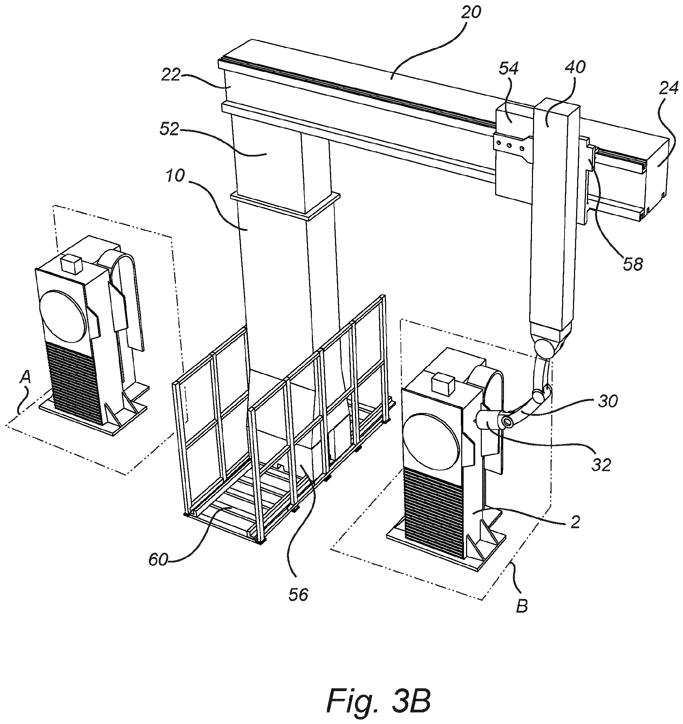

At a first end 12 of the support unit 10, an elongated beam 20 is arranged. The elongated beam 20 extends along the X-axis and is allowed to linearly move upon the support unit 10. The elongated beam 20 is moveable between a first position and a second position. In the first position, a first end portion 22 of the elongated beam 20 extends from the support unit 10 and out over the first work area A. In the second position, a second end portion 24 of the elongated beam 20 extends from the support unit 10 and out over the second work area B. The first position is illustrated in Fig. 2 and the second position is illustrated in Figs. 3A and 3B. The elongated beam 20 provides a first linear movement along the X-axis.

At a second end 14, the support unit 10 is mounted to a track 60 extending along the Y-axis, allowing the support unit 10 to move along the track 60. The track 60 may also be a groove, a rail, or other means suitable to move a frame along. The movement along the Y-axis allow the robot system to operate within a larger area and with larger objects.

The robot system 1 further comprises a suspension unit 40 arranged on the elongated beam 20 such that the suspension unit 40 is allowed to move along the elongated beam 20. Thereby, the robot system is provided with the first linear movement through the movement of the elongated beam 20 and a second linear movement along the X-axis, where the suspension unit 40 is moved along the elongated beam 20. With the two linear movement, one of the linear movement may be dedicated to switching work area and the other linear movement may be dedicated to move the robot 30 during work. Preferably, the first linear movement, where the elongated beam 20 moves upon the support unit 10, is used for switching in which work area the robot 30 is operating and the second linear movement, where the suspension unit 40 moves along the elongated beam 20, is used to move the robot 30 around the object 2. It is stressed how this linear movement allow the robot system 1 to keep the same coordinate system in both of the work areas A, B.

A robot 30 is arranged at the suspension unit 40 and the robot 30 comprises a tool holder 32 which is used when working on an object 2. The robot 2 may be a robot arm where the tool holder 32 holds an end tool which is used for example painting, welding, or construction. The robot arm is jointed to allow the robot arm to operate around an object.

The suspension unit 40 is elongated along the Z-axis and the robot 30 is arranged on the suspension unit 40 in such way that the robot 40 may move along the Z-axis. Therefore, the robot system 1 may move the robot 30 in three different directions. Along the X-axis through the movement of the elongated beam 20 and the movement of the suspension unit 40 along the elongated beam 20. Along the Y-axis through the movement of the support unit 10 along the track 60. Along the Z-axis through the movement of the robot 30 along the suspension unit 40. With these movements the robot may travel around the object in the work area A, B and is therefore able to reach the object from different angles.

The relative movement between for example the elongated beam 20 and the suspension unit 40 may be achieved by implementing tracks, or grooves on the elongated beam 20 and having slider or linear bearings on the suspension unit 40. However, as is known by the skilled person there are many mechanisms that may contribute to such relative movement. Similar mechanisms may be used for the other relative movements, i.e., the movement between the elongated beam 20 and the support unit 10, the support unit 10 and the track 60, and the suspension unit 40 and the robot 30.

The robot system 1 is provided with a drive arrangement 50 to individually control each of the movement between the elongated beam 20 and the support unit 10, the suspension unit 40 and the elongated beam 20, the track 60 and the support unit 10 and the suspension unit 40 and the robot 30. The drive arrangement 50 may first move the elongated beam 20 and thereafter the suspension unit 40 or move both the elongated beam 20 and the suspension unit 40 simultaneously. Generally, only one of the elongated beam 20 and the suspension unit 40 is moved at a time.

During the transition of the elongated beam 20 between the first position and the second position, the suspension unit 40 is positioned in a locked position. This is illustrated in Fig. 1 where the elongated beam 20 is moving from the first work area A to the second work area B. The locked position secures the suspension unit 40 such that no unexpected movements occur.

Turning to Fig. 2, the elongated beam 20 is in the first position, where the first end portion 22 extends over the first work area A and the robot 30 is allowed to work on an object 2 in the first work area A. As seen in Fig. 2, the elongated beam 20 have moved fully over to the first work area A such that the elongated beam 20 only extends over the first A of the two work areas A, B. If the elongated beam 20 only extends over one work area, the other work area will be free from the elongated beam 20. As the elongated beam 20 is not present in the free work area, the free work area may allow personnel or other robots to move a finished object away from the free work area, and also to prepare a new object for the robot 30 to work on when finished with the object 2 on which the robot 30 presently is working on.

In Fig. 2 to 3B, the drive arrangement 50 comprises a first drive unit 52 for moving the elongated beam 20 on the support unit 10 and a second drive unit 54 for moving the suspension unit 40 along the elongated beam 20. Further the drive arrangement 50 comprises a third drive unit 56 for moving the support unit 10 along the track 60 and a fourth drive unit 58 to move the robot 30 along the suspension unit 40. The drive arrangement 50 is separated into the respective drive units 52, 54, 56, 58 to provide a greater independence between each movement. However, as described in connection to Fig. 1, the drive arrangement may comprise one single drive unit that drives each respective movement.

Turning to Fig 3A and 3B, the elongated beam 20 is located in the second position, where the second end portion 24 extends over the second work area B and the robot 30 is allowed to work on an object 2 in the second work area B. As seen in Fig. 3A and 3B, the elongated beam 20 have moved fully over to the second work area B such that the elongated beam 20 only extends over the second work area B. In Fig. 3B it is further seen how the robot 30 has been moved along the Z-axis towards the object, illustrating how the robot 30 moves along the suspension unit 40.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A robot system (1) for carrying out work at two separate work areas (A, B), the robot system (1) comprising;
a support unit (10) configured to be positioned between the two work areas,
an elongated beam (20) extending along a geometrical X-axis and arranged on the support unit (10) such that the elongated beam (20) is allowed to linearly move between a first position, in which a first end portion (22) thereof is configured to extend from the support unit (10) and out over a first (A) of the two work areas (A, B), and a second position in which a second end portion (24) thereof is configured to extend from the support unit (10) and out over a second (B) of the two work areas (A,B),
a robot (30),
a suspension unit (40) configured to hold the robot (30) and arranged on the elongated beam (20) such that the suspension unit (40) is allowed to move along the elongated beam (20), and
a drive arrangement (50) configured to individually move each of the elongated beam and the suspension unit, thereby allowing the robot to selectively operate in each of the two work areas.

2. The robot system (1) according to claim 1, wherein the suspension unit (40) is elongated along a geometrical Z-axis and the robot (30) is arranged on the suspension unit (40) such that the robot (30) is allowed to move along the elongated suspension unit (40), and
wherein the drive arrangement (50) is further configured to individually move the robot (30) along the elongated suspension unit (40).

3. The robot system (1) according to claim 1 or 2, wherein the support unit (10) is mounted to a track (60) extending along a geometrical Y-axis allowing the support unit (10) to move along the track (60), and
wherein the drive arrangement (50) is further configured to individually move the support unit (10) along the track (60).

4. The robot system (1) according to any one of the preceding claims, wherein the elongated beam (20) in the first position is configured to only extend over the first (A) of the two work areas (A, B) and in the second position is configured to only extend over the second (B) of the two work areas (A, B).

5. The robot system (1) according to any one of the preceding claims, wherein the drive arrangement (50) comprises a first drive unit (52) for moving the elongated beam (20) and a second drive unit (54) for moving the suspension unit (40).

6. The robot system (1) according to any one of the preceding claims, wherein the suspension unit (40) has a locked position in which the suspension unit (40) is positioned when moving the elongated beam (20) between the first and the second position.

7. The robot system (1) according to any one of the preceding claims, wherein the elongated beam (20) has a length that is less than 67% of a distance, as seen along the X-axis, between two distant opposite sides (A1, B1) of the two work areas (A, B), and preferably the length is 50 % of the distance.

8. Use of a robot system according to any one of claims 1 to 7.
